# EUROPEAN PATENT APPLICATION

(11) **EP 0 566 959 A1**
(43) Date of publication of application: **27.10.1993**
(21) Application number: 93105976.0
(22) Date of filing: 13.04.1993
(51) Int. Cl.: F04B 35/04, F04B 39/04, F04B 41/02, H02K 7/065

(54) **Magnet compressor and power extracting apparatus making use of the same**

(30) Priority: 24.04.1992 JP 129869/92
(71) Applicant: COSMOSS ENERGY JAPAN COMPANY LIMITED, Sapporo, Hokkaido (JP)
(72) Inventor: Mikami, Kazunori, Toyohira-ku, Sapporo, Hokkaido (JP); Horie, Yae, Toyohira-ku, Sapporo, Hokkaido (JP)
(74) Representative: Leyh, Hans, Dr.-Ing.

(57) **Abstract**

A magnet compressor which is small in overall size and allows suction and compression/exhaustion of fluid with certainty is disclosed. An electromagnet (5) and a permanent magnet (4) are provided in an opposing relationship at an end portion of a cylinder (2) and a piston head (3), respectively. The electromagnet (5) is energized alternately in one and the other directions to change over the magnetic poles thereof so that an attractive force and a repulsive force may alternately act between the two magnets (5, 4) to move the piston head (3) back and forth to vary the volume of a compressor chamber (6). A novel power extracting mechanism (FIGS. 8 to 17) employing the magnet compressor (1) is also disclosed.

## Description

### BACKGROUND OF THE INVENTION

### 1. Field of the Invention

This invention relates to a magnet compressor wherein a piston head is moved back and forth in a cylinder making use of a magnetic force to perform suction and compression/exhaustion of fluid and also to a power extracting mechanism making use of the magnet compressor.

### 2. Description of the Related Art

A conventional reciprocating compressor is generally constructed such that a crankshaft is rotated by a motor provided outside the compressor and rotation of the crankshaft is converted into reciprocating movement of a piston head in a cylinder by way of a connecting rod. Suction and compression/exhaustion of fluid are performed by reciprocating movement of the piston head.

Since the conventional reciprocating compressor is constructed such that a crankshaft is rotated by a motor provided outside the compressor and rotation of the crankshaft is converted into reciprocating movement of a piston head in a cylinder by way of a connecting rod in this manner in order to perform suction and compression/exhaustion of fluid, it is disadvantageous in that the apparatus is comparatively large in overall size and the efficiency is low in suction and compression/exhaustion of fluid.

Meanwhile, a wind mill apparatus conventionally known as an example of a power extracting mechanism has rotary vanes which are rotated when they are blown by a natural wind and is utilized to drive, for example, a generator or a pump directly or indirectly.

Since the conventional wind power extracting mechanism employing a wind mill apparatus is constructed such that the rotary vanes are blown by a natural wind so as to be rotated by the latter and the turning force thereof is utilized to drive a driven mechanism such as, for example, a generator or a pump, the turning force is varied by physical conditions such as a velocity and a direction of the wind and a location of installation of the wind mill apparatus. Accordingly, it is difficult to always obtain a fixed torque of rotation.

### SUMMARY OF THE INVENTION

It is an object of the present invention to provide a magnet compressor which is small in overall size and allows suction and compression/exhaustion of fluid with certainty.

It is another object of the present invention to provide a power extracting mechanism wherein, making use of a magnet compressor, the turning force is not varied by natural conditions such as a velocity and a direction of a wind and a location of installation of the apparatus and a fixed torque of rotation can always be obtained.

In order to attain the objects, according to one aspect of the present invention, there is provided a magnet compressor, which comprises a piston head, a hollow cylinder in which the piston head is fitted for reciprocating movement so as to define between them a compressor chamber in which fluid is compressed when the piston head moves to decrease the volume of the compressor chamber, means for supplying fluid into the compressor chamber when the compressor chamber is expanding, means for extracting compressed fluid from the compressor chamber to the outside, a first magnet disposed in the compressor chamber at an end portion of the cylinder remote from the piston head, a second magnet mounted on the piston head in an opposing relationship to the first magnet, one of the first and second magnets being an electromagnet, and means operatively connected to the piston head for controlling the electromagnet so that the polarities of of magnetic poles of the electromagnet are changed over in accordance with reciprocating movement of the piston head in order to cause an attractive force and a repulsive force to alternately act between the first and second magnets to move the piston head toward and away from the first magnet to perform suction, compression and exhaustion of fluid into, in and from the compressor chamber.

With the magnet compressor, an attractive force and a repulsive force alternately act between the first and second magnets to reciprocate the piston head. Accordingly, fluid can be sucked into, compressed in and exhausted from the compressor chamber at a high efficiency. Further, since one of the first and second magnets is formed from an electromagnet, the entire apparatus can be formed in a small size.

According to another aspect of the present invention, there is provided a power extracting apparatus, which comprises an air cleaning apparatus for producing clean air, an air cooling apparatus for dehumidifying and cooling the clean air from the air cleaning apparatus, a magnet compressor as defined above for sucking the air from the air cooling apparatus, compressing the sucked air and exhausting the compressed air, a pressure tank for storing high pressure air compressed by the compressor, and a wind mill apparatus for being operated by the high pressure air stored in the pressure tank to provide an output power.

With the power extracting apparatus, since air is supplied to the compressor after it is cleaned and cooled, normally clean air is supplied to the magnet compressor, and accordingly, the compressor will not be damaged by an inadvertently admitted foreign article. Further, since high pressure air is stored into the pressure tank so that it may be supplied to the wind mill apparatus, the output power obtained from the wind mill apparatus is not varied by natural conditions such as a velocity and a direction of a wind and a location of installation of the power extracting apparatus. Accordingly, a driven apparatus connected to the power extracting apparatus can normally be driven by a fixed torque of rotation obtained from the power extracting apparatus.

The above and other objects, features and advantages of the present invention will become apparent from the following description and the appended claims, taken in conjunction with the accompanying drawings in which like parts or elements are denoted by like reference characters.

### BRIEF DESCRIPTION OF THE DRAWINGS

FIG. 1 is a vertical sectional front elevational view of a magnet compressor to which the present invention is applied;
FIG. 2 is a vertical sectional side elevational view of the magnet compressor of FIG. 1;
FIG. 3 is a partial, enlarged vertical sectional front elevational view of the magnet compressor of FIG. 1;
FIG. 4 is a partial, enlarged vertical sectional side elevational view of the magnet compressor of FIG. 1;
FIG. 5 is a fragmentary perspective view showing components of a rectifying circuit of the magnet compressor of FIG. 1;
FIG. 6 is a schematic sectional view of the magnet compressor of FIG. 1 upon suction of air;
FIG. 7 is a similar view but showing the magnet compressor of FIG. 1 upon compression and exhaustion of air;
FIG. 8 is a schematic view of a power extracting mechanism according to the present invention which is applied to a generating system;
FIG. 9 is a fragmentary perspective view of an air cleaning apparatus of the generating system of FIG. 8;
FIG. 10 is a vertical sectional view of the air cleaning apparatus of Fig. 9 and an air cooling apparatus of the generating system shown in FIG. 8;
FIG. 11 is a vertical sectional view of a pressure tank of the generating system of FIG. 8;
FIG. 12 is a vertical sectional view showing only a vessel of the pressure tank shown in FIG. 11;
FIG. 13 is a front elevational view showing a wind mill apparatus of the generating system of FIG. 8;
FIG. 14 is a schematic view, partly broken, showing the wind mill apparatus shown in FIG. 13;
FIG. 15 is a side elevational view showing a vane wheel of the generating system of FIG. 8;
FIG. 16 is a front elevational view of the vane wheel shown in FIG. 15; and
FIG. 17 is a fragmentary view showing a generator attached to the vane wheel shown in FIG. 15.

### DETAILED DESCRIPTION OF THE PREFERRED EMBODIMENTS

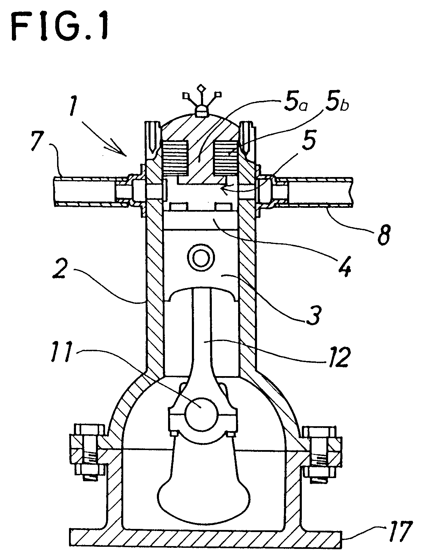

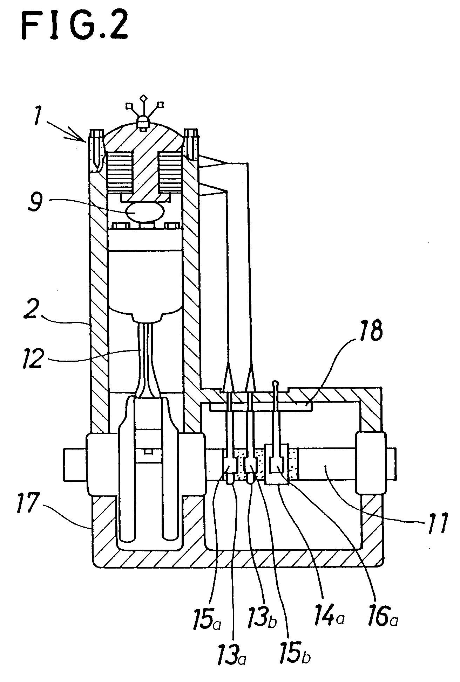

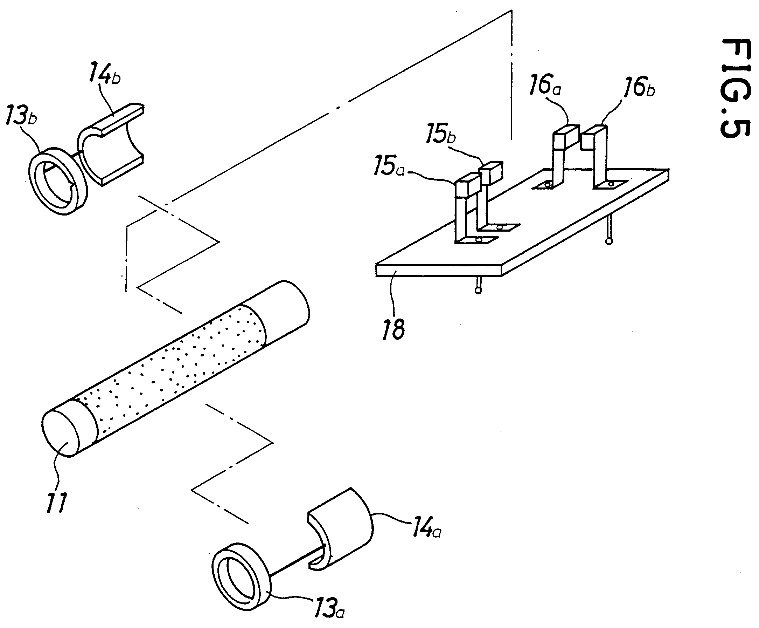

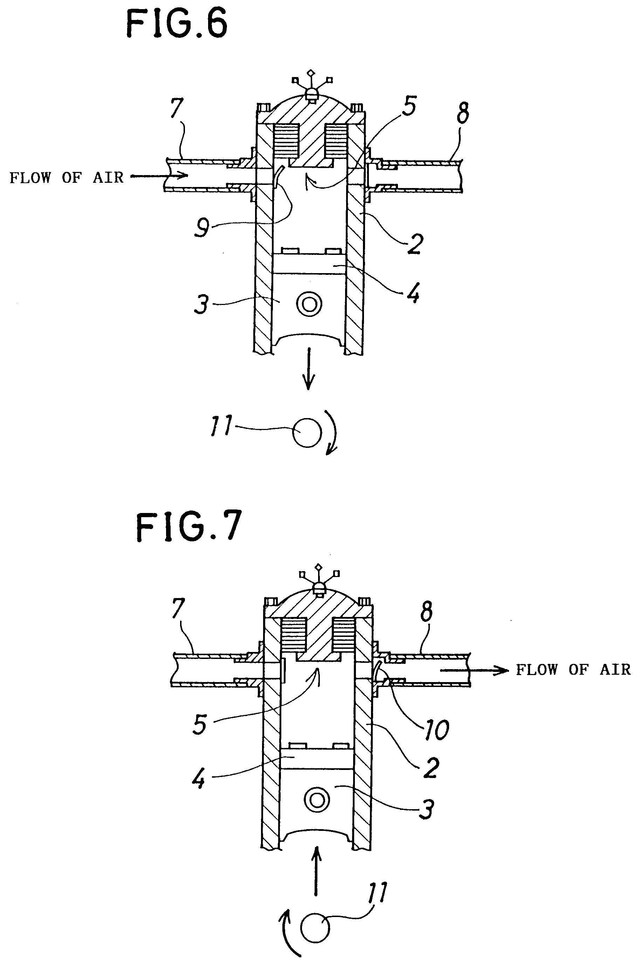

Referring first to FIGS. 1 to 7, there is shown a magnet compressor to which the present invention is applied. The magnet compressor is generally denoted at 1 and includes a cylinder 2 made of a ferromagnetic metal, a piston head 3 disposed for back and forth sliding movement in the cylinder 2, and a permanent magnet 4 in the form of a rare earth metal magnet having a strong magnetic force and mounted on and above the piston head 3. The permanent magnet 4 has a pair of magnetic poles disposed upwardly and downwardly with the north (N) pole disposed on the upper side.

The magnet compressor 1 further includes an electromagnet 5 disposed at an upper portion of the cylinder 2 in an opposing relationship to the north pole of the permanent magnet 4. The electromagnet 5 includes a coil 5b wound on an iron core 5a thereof. The iron core of the electromagnet 5 serves also as a cylinder cap for closing an opening at the top of the cylinder 2.

A compressor chamber 6 is defined by the permanent magnet 4 and the electromagnet 5 in the cylinder 2. Air as fluid is sucked into, compressed in and exhausted from the compressor chamber 6.

An intake port 2a is perforated in a side wall of the cylinder 2 defining the compressor chamber 6 and communicates with an air supply pipe 7. An exhaust port 2b is perforated at a location of the side wall of the cylinder 2 opposing to the intake port 2a and communicates with a high pressure air supply pipe 8.

An intake value 9 made of a non-magnetic resilient metal is disposed to selectively close the intake port 2a from the inner side of the cylinder 2. An exhaust valve 10 made of a non-magnetic resilient metal is disposed to selectively close the exhaust port 2b from the outer side of the cylinder 2.

Magnetic fluid R is interposed as a lubricant between the cylinder 2 and the piston head 3. The magnetic fluid R closes the compressor chamber 6 above the piston head 18 fully airtight. Further, the magnetic fluid R prevents otherwise possible abrasion of the piston head 3 and the cylinder 2 by friction between them and requires no such replacement as with a conventional lubricant.

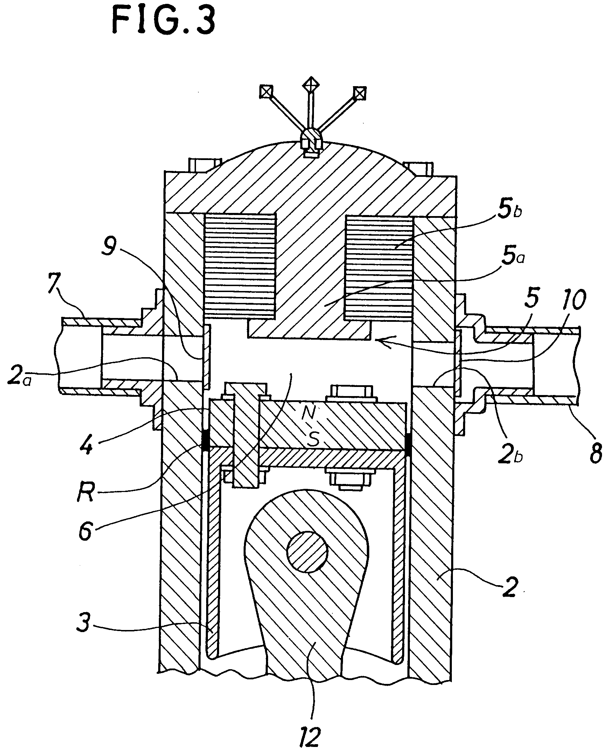

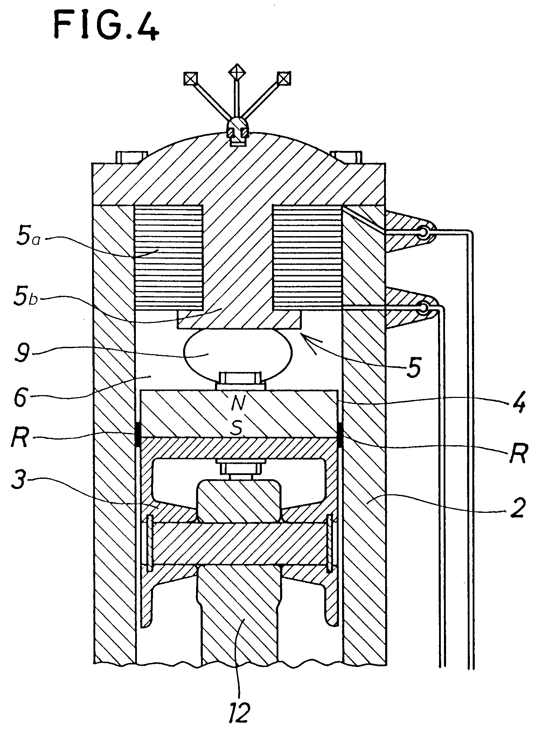

Since the permanent magnet 4 is mounted at the top of the piston head 3 with the north pole thereof positioned upwardly, the magnetic fluid R gathers at a location at which the bottom of the permanent magnet 4 on the south (S) pole side and the piston head 3 are joined together and which is effective for lubrication and air-tightness as seen from FIGS. 3 and 4.

A crankshaft 11 is connected to the piston head 3 by way of a connecting rod 12, and a pair of slip rings 13a and 13b are individually fitted in a predetermined axially spaced relationship on the crankshaft 11. A pair of commutator elements 14a and 14b are mounted in a circumferentially spaced relationship on an outer periphery of the crankshaft 11 and electrically connected to the corresponding slip rings 13a and 13b, respectively.

A pair of brushes 15a and 15b are electrically connected to the opposite ends of the coil 5b of the electromagnet 5 and slidably contact with the corresponding slip rings 13a and 13b, respectively. Another pair of brushes 16a and 16b are disposed on the opposite sides of the crank shaft 11 and slidably contact with the corresponding commutator elements 14a and 14b, respectively. The brushes 16a and 16b are connected to a dc power source not shown.

The brushes 15a, 15b, 16a and 16b are implanted on a brush supporting plate 18 mounted on a crankshaft case 17.

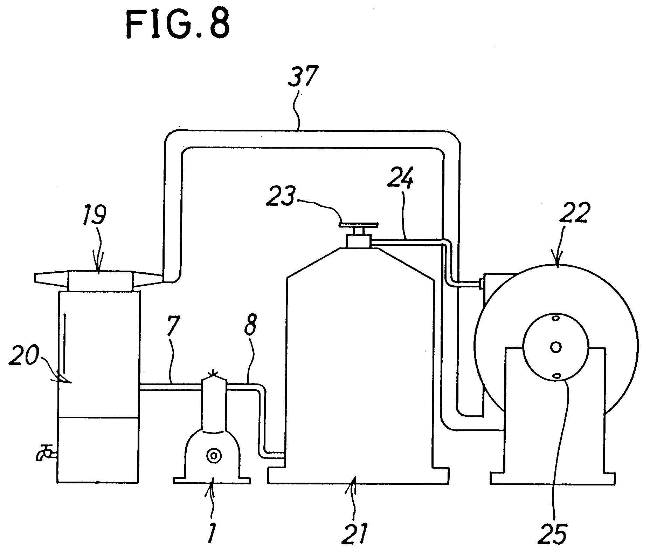

Referring now to FIG. 8, there is shown a generating system in which a power extracting mechanism according to the present invention which employs the magnet compressor 1 described above is incorporated. The generating system shown includes an air cleaning apparatus 19 placed on and joined to an air cooling apparatus 20 which has an air cooling function and a dehumidifying function. The air cleaning apparatus 19 communicates with an opening in the top wall of the air cooling apparatus 20. The air cooling apparatus 20 is connected to the compressor 1 by way of the air supply pipe 7. A pressure tank 21 is connected to the compressor 1 by way of the high pressure air supply pipe 8. A wind mill apparatus 22 is connected to the pressure tank 21 by way of a manually operable valve 23 and a discharge pipe 24 which is provided at a high pressure air output end of the compressor 21. A generator 25 is connected to be driven by turning force of the wind mill apparatus 22. Power generated by the generator 25 may be utilized as a power source for the air cooling apparatus 20, the compressor 1 and so forth and may be temporarily stored into a required storage apparatus so that it may be used at a suitable later time.

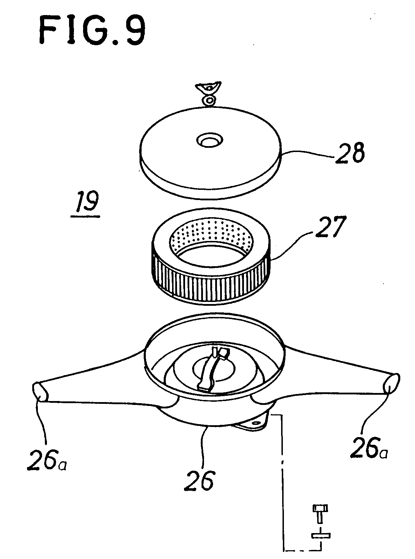

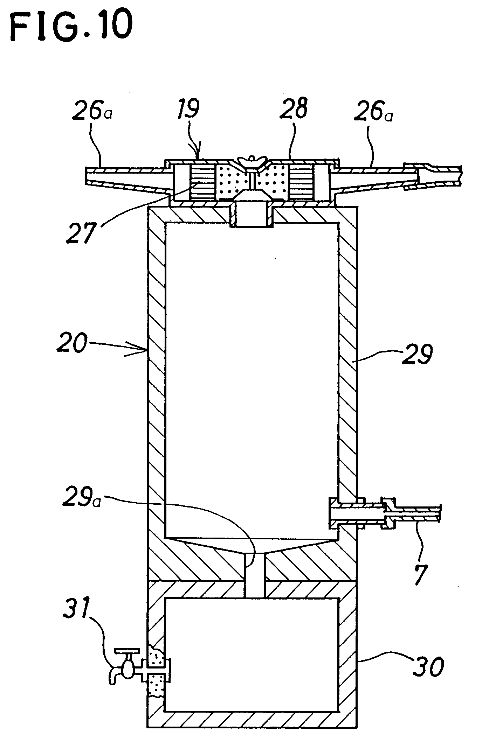

Referring now to FIGS. 9 and 10, the air cooling apparatus 19 includes a filter element 27 accommodated in a hollow body casing 26 which has a pair of air inlet ports 26a therein. The body casing 26 is closed with a lid member 28, and an air exit of the filter element 27 is communicated with the opening in the top wall of the air cooling apparatus 20.

The air cooling apparatus 20 cools and dehumidifies air by means of refrigerant which circulates through a compressor, a condenser, an expansion valve, an evaporator and so forth thereof not shown. The air cooling apparatus 20 includes a box-like member 29 placed on a drain water storing vessel 30 and having a drain hole 29a perforated in a bottom wall thereof. A drain tap 31 is attached to a bottom wall or a side face of a bottom portion of the drain water storing vessel 30.

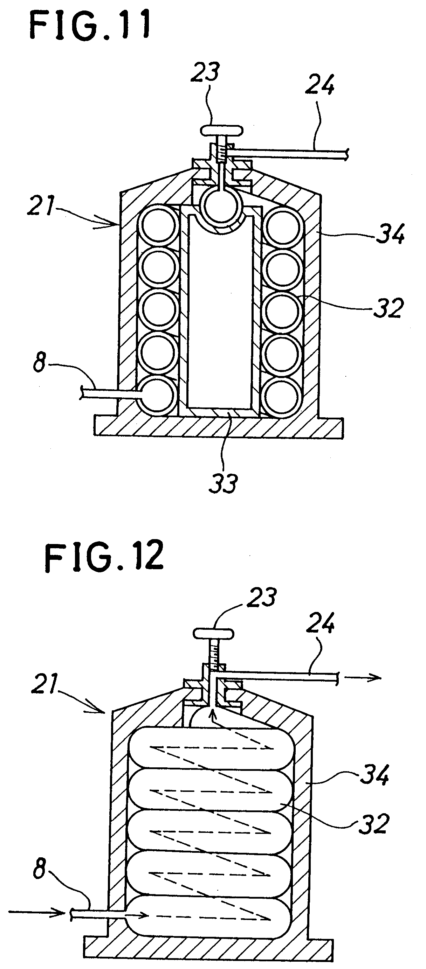

Referring now to FIGS. 11 and 12, the pressure tank 21 includes a rubber tube 32 made of hard rubber and wound around a cylindrical member 33 made of a metal, and a vessel 34 also made of hard rubber and surrounding the rubber tube 32. The high pressure air supply pipe 8 extends through the vessel 34 and is connected to an end of the rubber tube 32, and the discharge pipe 24 also extends through the vessel 34 and is connected to the other end of the rubber tube 32. The manually operable valve 23 is provided at a location at which the rubber tube 32 and the discharge pipe 24 are connected to each other and selectively connects and disconnects the rubber tube 32 and the discharge pipe 24 with and from each other.

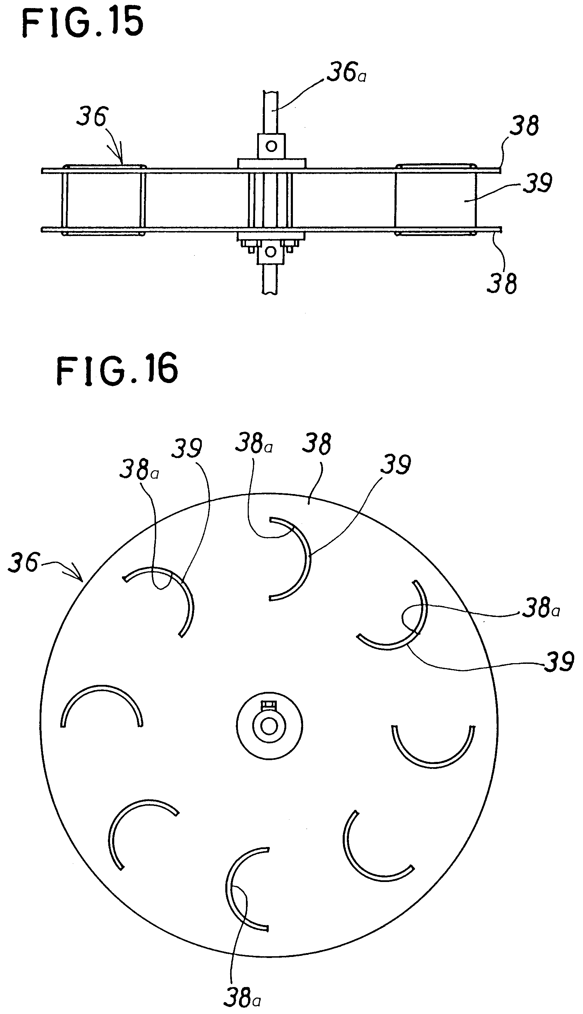

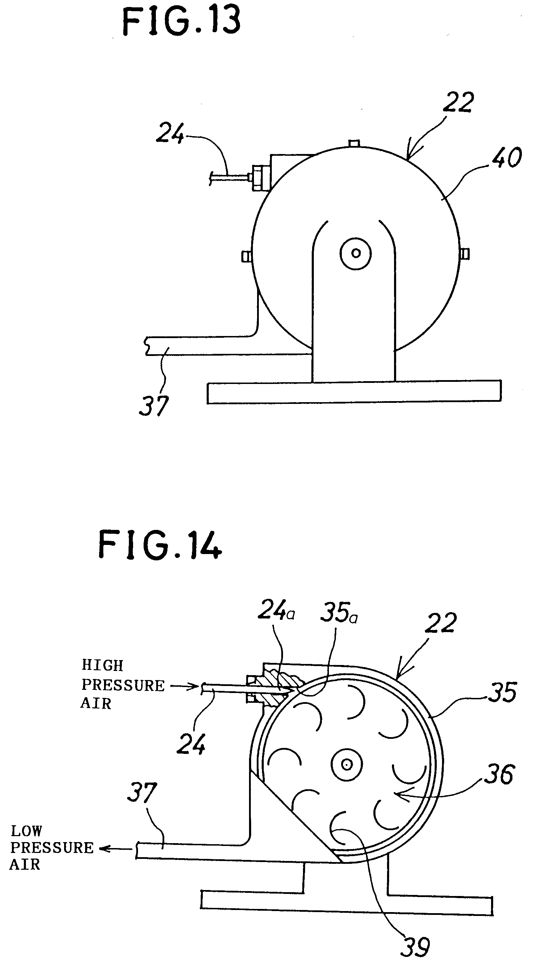

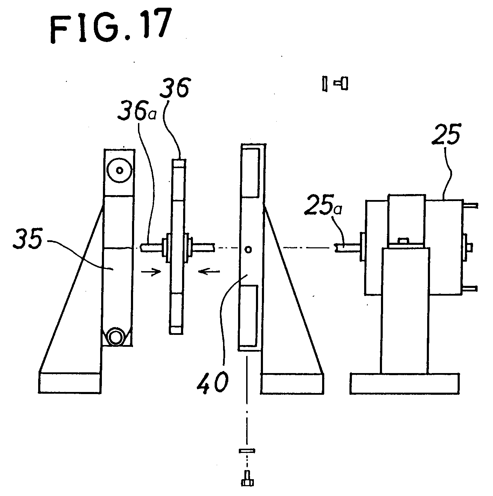

Referring now to FIGS. 13 to 17, the wind mill apparatus 22 incudes a vane wheel casing 35 in which a vane wheel 36 is accommodated. A nozzle mounting hole 35a is perforated at an upper portion of the vane wheel casing 35, and an injection nozzle 24a at an end of the discharge tube 24 is fitted in the nozzle mounting hole 35a. A returning pipe 37 for returning air discharged from the wind mill apparatus 22 to the air cleaning apparatus 19 is provided contiguously at a lower portion of the vane wheel casing 35.

The vane wheel 36 includes a pair of runner supporting plates 38 each having eight semicircular slits 38a formed therein at an equal angular distance in a circumferentially direction. A runner 39 is fitted at the opposite end portions thereof in each pair of opposing ones of the slits 38a of the runner supporting plates 38 and is fastened to the runner supporting plates 38.

A lid 40 is provided for the vane wheel casing 35, and a rotary shaft 36a of the vane wheel 36 is supported for rotation on the vane wheel casing 35 and the lid 40.

A rotary shaft 25a of the generator 25 is connected to the rotary shaft 36a of the vane wheel 36 so that the generator 25 is driven by rotation of the vane wheel 36.

When the compressor 1 is inoperative, the piston head 3 is positioned such that the permanent magnet 4 thereon is positioned nearest to the electromagnet 5. In this condition, an electric current is supplied to flow in one direction through the coil 5b of the electromagnet 5. Thereupon, the north pole is generated at a lower portion of the electromagnet 5 adjacent or opposing to the permanent magnet 4. Consequently, a repulsive force acts between the north pole at the lower portion of the electromagnet 5 and the north pole on the upper portion of the permanent magnet 4.

Thus, when an electric current is supplied to flow in the one direction through the coil 5b of the electromagnet 5 while the permanent magnet 4 and the electromagnet 5 are positioned nearest to each other, a repulsive force acts between the permanent magnet 4 and the electromagnet 5 and moves down the piston head 3.

When the piston head 3 is moved down, the crankshaft 11 is rotated by the piston head 3. Then, when the piston head 3 comes to a first predetermined position, the brush 16a, which has been in contact with the commutator element 14a, is put into contact now with the other commutator element 14b while the other brush 16b, which has been in contact with the commutator element 14b, is put into contact now with the other commutator element 14a, and consequently, the direction of the current flowing through the coil 5b of the electromagnet 5 is reversed. Consequently, the magnetic pole of the electromagnet 5 opposing to the north pole of the permanent magnet 4 is changed over from the north pole to the south pole, and accordingly, an attractive force now acts between the electromagnet 5 and the permanent magnet 4.

However, since the piston head 3 is on the way of its downward movement, it is moved downwardly by its own inertia until it comes to its lowermost position, at which it changes over its direction of movement.

After the piston head 3 begins its upward movement, the permanent magnet 4 thereon is attracted to and moved toward the electromagnet 5 by an attractive force which acts between them. Also during the upward movement of the piston head 3, the crankshaft 11 is rotated by the piston head 3. Then, when the piston head 3 comes to a second predetermined position, the brush 16a, which has been in contact with the commutator element 14b, is put into contact now with the other commutator element 14a and the other brush 16b, which has been in contact with the commutator element 14a, is put into contact now with the commutator element 14b. Consequently, the direction of the current flowing through the coil 5b of the electromagnet 5 is changed over back to its original flowing direction so that the magnetic pole of the electromagnet 5 opposing to the north pole of the permanent magnet 4 is changed over from the north pole to the south pole. Consequently, a repulsive force now acts between the electromagnet 5 and the permanent magnet 4.

However, since the piston head 3 is on the way of its upward movement, it is moved upwardly by its own inertia until it finally reaches its uppermost position, at which it reverses its direction of movement so that it thereafter moves downwardly.

Then, when the piston head 3 comes to the first predetermined position, the flowing direction of the electric current is reversed so that an attractive force thereafter acts between the electromagnet 4 and the permanent magnet 4. Thus, the piston head 3 will thereafter be reciprocated upwardly and downwardly by an attracting force and a repulsive force alternately acting between the permanent magnet 4 and the electromagnet 5 in a similar manner as described above.

When the piston rod 3 moves down, the compressor chamber 6 defined by the permanent magnet 4 and the electromagnet 5 in the cylinder 2 is put into a negative pressure condition. Consequently, the intake valve 9, which has been in a closing condition, opens the intake port 2a to admit air into the compressor chamber 6 by way of the air supply pipe 7.

Then, when the pressure in the air supply pipe 7 and the pressure in the compressor chamber 6 become equal to each other, the admission of air is stopped and the movement of the piston head 3 is changes over from downward movement to upward movement, whereupon the intake port 9 is closed.

In this instance, air is sucked into the filter element 27 by way of the air inlet port 26a, and consequently, clean air, from which dust and some other foreign articles have been removed, is supplied into the air cooling apparatus 20. Then, the air, which has been cooled and dehumidified by the air cooling apparatus 20, is introduced into the air supply pipe 7.

Consequently, no foreign articles such as dust is admitted between the cylinder 2 and the piston head 3. Further, since the compressor chamber 6 is cooled by cooled air, there is no necessity of providing a cooling apparatus for exclusive use for the compressor 1 itself.

It is to be noted that air is cooled by the air cooling apparatus 20 so that the temperature thereof may not become lower than 0 °C, and consequently, water is condensed to dew drops in the box-like member 29. The water will drop through the drain hole 29a of the body body 29 into and stored in the drain water storing vessel 30. As a result, air is dehumidified.

When the piston head 3 is moved up subsequently, internal air of the compressor chamber 6 is compressed. Consequently, the exhaust valve 10, which has been in its closing condition, is opened so that high pressure air is admitted into the high pressure air supply pipe 8 by way of the exhaust port 2b. The high pressure air is accumulated gradually in the pressure tank 21.

As the intake port 9 and the exhaust port 10 are opened and closed alternately and repetitively in this manner, high pressure air is stored from the compressor 1 into the pressure tank 21 by way of the high pressure air supply pipe 8.

Then, after a predetermined sufficiently high pressure is reached in the pressure tank 21, the manually operable valve 23 will be manually opened while the pressure in the inside of the pressure tank 21 is kept fixed. Consequently, high pressure air is injected from the injection nozzle 24a into the wind mill apparatus 22 by way of the discharge pipe 24. In particular, high pressure air is injected from the injection nozzle 24a while the rate of high pressure air flowing into the pressure tank 21 from the compressor 1 and the rate of high pressure air flowing out from the pressure tank 21 are kept equal to each other so that the air pressure in the pressure tank 21 may be fixed even when the manually operable valve 23 is in its open condition.

The high pressure air is injected from the injection nozzle 24a toward the runners 39 of the vane wheel 36 so that it drives the wind mill apparatus 22 to rotate. The generator 25 is driven by the turning force of the wind mill apparatus 22 so that a required power is outputted from the generator 25.

While the compressor 1 is constructed such that the electromagnet 5 is provided at an end portion of the cylinder 2 and the permanent magnet 4 is provided on the piston head 3 in an opposing relationship to the electromagnet 5, similar effects are achieved otherwise if a pair of electromagnets are disposed in an opposing relationship to each other on the cylinder cap and the piston head 3 and the magnetic poles of the electromagnet on the piston head 3 is secured such that the north pole thereof is always opposed to the electromagnet 5 on the cylinder cap.

Further, while the magnetic fluid R is employed as the lubricant between the permanent magnet 4 mounted on the piston head 3 and the cylinder 2, when the airtight property of the compressor chamber 6 does not matter very much, an ordinary lubricant may be used to assure good lubrication between them. In this instance, the limitation that the north pole of the permanent magnet 4 on the piston head 3 is disposed on the upper side is eliminated, and the permanent magnet and the electromagnet may be opposed to each other or a pair of electromagnets may be opposed to each other.

Furthermore, while the compressor 1 provided between the air cooling apparatus 20 and the pressure tank 21 is described as having a single cylinder, it may otherwise have a plurality of cylinders, or else, a plurality of compressors 1 may be provided such that high pressure air may be introduced from them into the pressure tank 21. Where such construction is employed, the air exhausting output is enhanced, and consequently, a greater amount of high pressure air can be supplied into the pressure tank 21 and high pressure air can be injected stably from the pressure tank 21.

In addition, while the cylindrical member 32 is surrounded by the rubber tube 33 made of hard rubber and the rubber tube 33 is in turn surrounded by the vessel 34 made of hard rubber to form the pressure tank 21, the pressure vessel is not limited to such pressure vessel of the specific construction, and any pressure vessel can be employed only if high pressure air can be stored in it.

Having now fully described the invention, it will be apparent to one of ordinary skill in the art that many changes and modifications can be made thereto without departing from the spirit and scope of the invention as set forth herein.

## Claims

1. A compressor utilizing a magnet, characterized in that a first magnet (5) is provided at an end portion of a cylinder (2) while a second magnet (4) is provided in an opposing relationship to said first magnet (5) on a piston head (3) which slidably reciprocates in said cylinder (2), and at least one (5) of said magnets (5, 4) is an electromagnet having magnetic poles the polarities of which are varied in accordance with reciprocating movement of said piston head (3) in order to cause an attractive force and a repulsive force to alternately act between said first and second magnets (5, 4) to perform suction, compression and exhaustion of fluid into, in and from a compressor chamber (6) defined by said cylinder (2) and said piston head (3).

2. A magnet compressor as set forth in claim 1, characterized in that said first magnet (5) is secured at the end portion of said cylinder (2) and cooperates with said cylinder (2) and said piston head (3) to define said compressor chamber (6).

3. A magnet compressor as set forth in claim 2, characterized in that said first magnet (5) is said electromagnet.

4. A magnet compressor as set forth in claim 2, characterized in that said first magnet (5) serves also as a cylinder cap for closing the end of said cylinder (2).

5. A magnet compressor as set forth in any one of the preceding claims, characterized in that said first and second magnets (5, 4) are disposed such that one of a pair of magnetic poles of one of them is opposed to one of a pair of magnetic poles of the other of them.

6. A magnet compressor as set forth in any one of the preceding claims, characterized in that said electromagnet (5) is controlled by controlling means which includes a crank shaft (11) connected to be rotated by said piston head (3) when said piston head (3) reciprocates, and a commutator and brush apparatus (FIG. 5) provided on said crank shaft (11) and electrically connected to said electromagnet (5).

7. A power extracting apparatus, characterized in that it comprises an air cleaning apparatus (19) for producing clean air, an air cooling apparatus (20) for dehumidifying and cooling the clean air from said air cleaning apparatus (19), a magnet compressor (1) as set forth in any one of claims 1 to 6 for sucking the air from said air cooling apparatus (20), compressing the sucked air and exhausting the compressed air, a pressure tank (21) for storing high pressure air compressed by said compressor (1), and a wind mill apparatus (22) for being operated by the high pressure air stored in said pressure tank (21) to provide an output power.
